Europäisches Patentamt

European Patent Office

Office européen des brevets

(19)

(11) EP 0 508 517 B2

(12) **NEUE EUROPÄISCHE PATENTSCHRIFT**

(45) Veröffentlichungstag und Bekanntmachung des Hinweises auf die Entscheidung über den Einspruch:
**18.06.2003   Patentblatt 2003/25**

(51) Int Cl.$^7$: **G01L 13/06**

(45) Hinweis auf die Patenterteilung:
**17.05.1995   Patentblatt 1995/20**

(21) Anmeldenummer: **92200830.5**

(22) Anmeldetag: **23.03.1992**

(54) **Kompensiertes Differenzdruckmessgerät**

Compensated differential pressure transducer

Capteur compensé de pression différentiel

(84) Benannte Vertragsstaaten:
**DE FR GB**

(30) Priorität: **29.03.1991   DE 4110447**

(43) Veröffentlichungstag der Anmeldung:
**14.10.1992   Patentblatt 1992/42**

(73) Patentinhaber: **ENVEC Mess- und Regeltechnik GmbH + Co.**
**79576 Weil am Rhein (DE)**

(72) Erfinder:
• **Lange, Jürgen**
**W-3502 Vellmar (DE)**
• **Peppermüller, Alfred**
**W-3500 Kassel (DE)**
• **Petersen, Jens-Carsten**
**W-3500 Kassel (DE)**
• **Schnitker, Wolfgang, Dr.**
**W-3502 Vellmar (DE)**

(74) Vertreter: **Andres, Angelika et al**
**PatServ-Zentrale Patentabteilung,**
**Endress + Hauser (Deutschland) Holding GmbH,**
**Postfach 2222**
**79574 Weil/Rhein (DE)**

(56) Entgegenhaltungen:
EP-A- 0 361 590          EP-A- 0 420 105
DE-A- 3 504 329          DE-A- 3 512 529
DE-A- 3 839 864          GB-A- 961 852
US-A- 4 389 895          US-A- 4 531 415
US-A- 4 549 180          US-A- 4 598 381
US-A- 5 163 326

EP 0 508 517 B2

**Beschreibung**

Die Erfindung betrifft ein Differenzdruckmeßgerät mit einer flüssigkeitsgefüllten Einkammer-Differenzdruckmeßzelle mit zwei Meßkondensatoren.

Differenzdruckmeßgeräte sind beispielsweise aus der DE-C 35 04 329 und der DE-C 39 32 443 bekannt. In beiden Schriften wird eine Einkammer-Differenzdruckmeßzelle beschrieben, die aus einem zylindrischen Körper aus Metalloxid-, z.B. aus Aluminiumoxid-Keramik besteht, an dessen Stirnseiten je eine Membran unter Bildung eines Hohlraumes angebracht ist. Die Meßkondensatoren werden durch Schichtelektroden gebildet, die auf den einander zugewandten Flächen des zylindrischen Körpers und der Membranen angebracht sind. Die Meßkondensatoren sind mit $C_1$ und $C_2$ bezeichnet.

Die entstehenden Hohlräume sind durch einen im zylindrischen Körper angebrachten Kanal miteinander verbunden. Das vollständige Volumen der derart gebildeten gemeinsamen Kammer ist mit einer Flüssigkeit gefüllt, die an sich inkompressibel ist, tatsächlich hinsichtlich ihrer Kompressibilität allerdings nicht exakt einer idealen Flüssigkeit entspricht. Sind die beiden auf die Membranen wirkenden Drücke verschieden groß, so werden die Membranen infolge der hydraulischen Kopplung durch die Flüssigkeit gegensinnig ausgelenkt, wodurch sich die auf der Seite des höheren Druckes befindliche Membran dem Körper nähert, während sich die andere auf der Seite des geringeren Druckes befindliche Membran vom zylindrischen Körper entfernt. Dadurch ändern sich die Kapazitäten der Meßkondensatoren in Abhängigkeit vom Differenzdruck gegensinnig, wobei der Differenzdruck näherungsweise proportional der Differenz der reziproken Kehrwerte entsprechend folgender Gleichung ist:

$$\delta p = K_p(1/C_1 - 1/C_2) \qquad (1)$$

Ändert sich dagegen das Volumen der Füllflüssigkeit infolge einer Temperaturänderung durch thermische Ausdehnung oder infolge eines anstehenden Prozeßdrucks, z.B. durch geringfügige Kompression der Flüssigkeit, so bewegen sich die Membranen gleichzeitig entweder zum zylindrischen Körper hin oder sie entfernen sich von ihm, mit der Folge, daß die Kapazitäten der Meßkondensatoren gleichzeitig zunehmen oder abnehmen. Der nach Gleichung (1) mit der Proportionalitätskonstanten $K_p$ berechnete Wert des Differenzdrucks $\delta p$ ist somit temperatur- und prozeßdruckabhängig.

Bei der aus der DE-C 35 04 329 bekannten analogen Schaltung oder der aus der DE-C 39 32 443 bekannten digitalen Schaltung wird zur Kompensation des Fehlers des nach Gleichung (1) berechneten Differenzdrucks eine Korrekturgröße benutzt, die nach der

Gleichung

$$\delta T = (K_T - K_s)(1/C_1 + 1/C_2) \qquad (2)$$

berechnet wird. Hierbei ist von entscheidendem Nachteil, daß die in gleicher Richtung wirkenden Einflüsse der Temperatur $K_T$ und des Prozeßdrucks $K_s$ nicht voneinander trennbar sind, wodurch sich regelmäßig ein Fehler in dem nach Gleichung (1) berechneten Differenzdruck ergibt, bedingt durch den anstehenden Prozeßdruck.

Hier sei noch erwähnt, daß die aus der DE-C 39 32 443 bekannte zusätzliche Temperaturmeßeinrichtung diesen Fehler ebenfalls nicht zu erkennen vermag und im wesentlichen der Erkennung von Temperatur und sonstigen Störungen dient, die die Meßsignale der Differenzdruckmeßzelle verfälschen. Eine Differenzierung zwischen Temperatur- und Prozeßdruckeinflüssen ist danach nicht möglich. Ferner sei angemerkt, daß selbst bei hinsichtlich der Kompressibilität tatsächlich idealer Flüssigkeit der Prozeßdruck durch Stauchung des zylindrischen Körpers geringfügig Einfluß auf das Flüssigkeitsvolumen nehmen kann, was u.U. ebenfalls zu Fehlern durch den Prozeßdruck führt.

Der Erfindung, wie sie in Anspruch 1 definiert ist, liegt die Aufgabe zugrunde, ein Differenzdruckmeßgerät zu schaffen, das auf einfache Weise zu fehlerkompensierten sicheren Differenzdruckwerten führt.

Aus der DE-A 38 39 864 ist zwar ein Halbleiter-Differenzdruckmeßgerät mit in einen membran-artigen Teil des Halbleiterkörpers eindiffundierten Drucksensoren und mit einem an einer von den piezoresistiver Differenzdrucksensoren mechanisch entkoppelten Stelle in den Halbleiterkörper eindiffundierten piëzoresistiven Sensor für den statischen Druck bekannt, wobei der Halbleiterkörper zwischen dem Ort der Differenzdrucksensoren und dem des zusätzlichen Sensors geschlitzt ist.

Diese Lehre läßt sich bei den eingangs erwähnten, vorbekannten kapazitiven Keramiksensoren jedoch nicht ohne weiteres anwenden. Die kapazitive Differenzdruckmeßzelle läßt sich nach dieser Lehre nämlich kaum so konstruieren, daß eine mit der obigen Stelle vergleichbare mechanisch entkoppelte Stelle realisierbar ist, an der ein zusätzlicher Sensor anzuordnen wäre, da sich ein Schlitzen des Keramik-Körpers schon aus Symmetriegründen verbietet. Vielmehr wird gerade in Abweichung von dieser Lehre der unveränderte Körper selbst als Ort des zusätzlichen Sensors gewählt.

In Ausgestaltung der Erfindung weist das erfindungsgemäße Differenzdruckmeßgerät zunächst eine an sich bekannte Auswerteschaltung auf, die aus einem Regelkreis mit einem Regler, einem Oszillator, einem Referenztiefpaß mit einem Referenzkondensator, einem diesem nachgeschalteten ersten Summierverstärker mit Meßsignaleingängen und einem ersten Gleichrichter besteht. Ferner weist die Auswerteschaltung einen ersten Tiefpaß auf, der mit dem ersten Meßkondensator verbunden ist, und einen zweiten Tiefpaß, der mit dem zweiten Meßkondensator verbunden ist. Alle Tiefpässe sind eingangsseitig mit dem Ausgang des Oszillators verbunden und deren jeweilige Ausgangssignale über einen nachgeordneten zweiten Summierverstärker mit einem zweiten Gleichrichter, an dessen Ausgang ein temperaturkompensiertes Differenzdrucksignal entsteht, auf das das Ausgangssignal des zusätzlichen Sensors mindestens indirekt einwirkt.

In Weiterbildung ist der erste Summierverstärker des Regelkreises eingangsseitig mit den Ausgängen aller Tiefpässe verbunden. Eine Erhöhung des Signals am Ausgang des ersten Gleichrichters im dynamischen Regelkreis bewirkt über den Regler eine Absenkung der Amplitude des Oszillators, die ihrerseits eingangsseitig auf die Tiefpässe wirkt, wodurch der zweite Summierverstärker am Ausgang des zweiten Gleichrichters ein Differenzdrucksignal erzeugt, das entsprechend temperatur-kompensiert ist und mindestens indirekt mit dem Signal des zusätzlichen Sensors beaufschlagt werden kann.

Ferner ist in Weiterbildung der Wert des Referenzkondensators entsprechend dem Mittelwert der Summe der Meßkondensatoren beim Differenzdruck null gewählt. Um alle weiteren Parameter zur Temperaturkompensation der Auswerteschaltung zu bestimmen, wird eine Eichung bei mindestens zwei bekannten Temperaturen und mindestens zwei bekannten Differenzdrücken durchgeführt. Hinsichtlich der Temperaturkompensation ist die Auswerteschaltung damit funktionsfähig.

Hinsichtlich der Eichung wird noch darauf hingewiesen, daß diese bei mindestens zwei Temperaturen und mindestens zwei Differenzdrücken derart erfolgt, daß für jede der Messungen bei gegebener Temperatur und bei gegebenem Differenzdruck die Ausgangsspannungen der drei Tiefpässe gemessen werden. Aus dem Sollwert am Ausgang des nicht im Regelkreis befindlichen Summierverstärkers werden dann die für die Verstärkerstufen notwendigen Verstärkungsfaktoren für die drei zugeführten Ausgangsspannungen der Tiefpässe berechnet.

Die derart beschriebene Auswerteschaltung kann mittels eines Signals des zusätzlichen Sensors vollständig, also auch druckfehler-, kompensiert werden. Dazu weist die Auswerteschaltung einen dritten Summierverstärker am Ausgang des zweiten Gleichrichters auf, an dem bereits das temperatur-kompensierte Differenzdrucksignal entsteht. Dieser dritte Summierverstärker erhält als weiteres Eingangssignal das Signal des zusätzlichen Sensors, wodurch an dessen Ausgang ein vollständig fehlerkompensiertes Differenzdrucksignal entsteht.

Diese äußerst einfache Erweiterung durch Einfügung und Anordnung des dritten Summierverstärkers für den zusätzlichen Sensor hat jedoch noch einen geringfügigen Schönheitsfehler, da der Nullpunkt des Signals am Ausgang des zweiten Gleichrichters dadurch verfälscht wird, daß das Signal des zusätzlichen Sensors nicht dem Differenzdruck, sondern dem Prozeßdruck entspricht und somit immer dann ein Signal erzeugt, wenn der Prozeßdruck nicht vollständig null ist.

Eine erfindungsgemäße Alternative kann diesbezuglich Abhilfe schaffen. Dementsprechend weist die Auswerteschaltung einen vierten Summierverstärker auf, der allerdings eingangsseitig mit dem ersten Gleichrichter des Regelkreises und ausgangsseitig mit dessen Regler verbunden ist und ferner eingangsseitig mit dem Signal des zusätzlichen Sensors beaufschlagt wird. Entsprechend dieser Alternative wird der Prozeßdruck bereits im Regelkreis berücksichtigt und folglich am Ausgang des zweiten Gleichrichters, an dem zuvor nur ein temperaturkompensiertes Differenzdrucksignal entstand, ein vollständig fehlerkompensiertes Differenzdrucksignal erzeugt.

Bei dieser Ausgestaltung der Erfindung wird der Prozeßdruck in vorteilhafter Weise bereits in die Regelung eingeführt, wodurch keine Nullpunktverfälschung entsteht und der Prozeßdruck ebenso wie die Temperatur ausgeregelt werden. Eine Eichung ähnlich der Temperaturkompensation kann ebenfalls vorgesehen sein. Ferner kann vorgesehen sein, daß der Regelkreis und somit die Auswerteschaltung über den Regler mit einer Referenzspannungsquelle spannungsversorgt sind.

Der zusätzliche Sensor erzeugt ein druckproportionales Spannungssignal und kann intern aus Dehnungsmeßstreifen o. dgl. aufgebaut sein. Gemäß einer vorteilhaften Ausgestaltung der Erfindung kann der Sensor in zwei Teilsensoren aufgespalten sein, welche jeweils die auf die Membranen der Differenzdruckmeßzelle wirkenden Drücke erfassen und wobei z.B. rechnerisch aus der halbierten Summe dieser Drücke der Prozeßdruck ermittelt und der Auswerteschaltung zugeführt wird.

Gemäß einer besonderen Ausgestaltung der Erfindung kann die Differenzdruckmeßzelle mit einem zusätzlichen Temperaturfühler, dessen Ausgangssignal in der Auswerteschaltung in ein Fehlerrneldesignal umgesetzt wird, versehen sein. Die Auswerteschaltung kann überdies digital aufgebaut sein.

Weitere vorteilhafte Ausgestaltungen der Erfindung ergeben sich aus den Unteransprüchen.

Ein Ausführungsbeispiel der Erfindung wird nachfolgend unter Bezugnahme auf die Zeichnung näher erläutert. Darin zeigt

Fig. 1 ein Differenzdruckmeßgerät mit einer Auswerteschaltung mit einer ersten Ankopplung eines zusätzlichen Drucksensors, und

Fig. 2 ein Differenzdruckmeßgerät mit einer zweiten Ankopplung eines zusätzlichen Drucksensors.

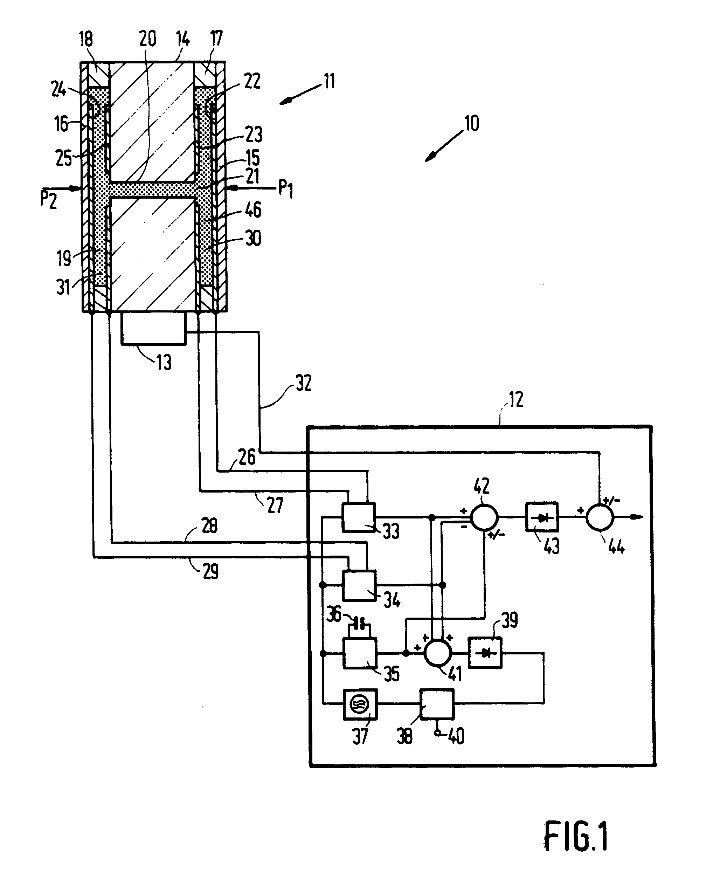

Fig. 1 zeigt ein Differenzdruckmeßgerät 10 mit einer Einkammer-Differenzdruckmeßzelle 11 und einer elektrisch mit dieser verbundenen Auswerteschaltung 12. Ein zusätzlicher Drucksensor 13 ist an der Differenzdruckmeßzelle 11 angeordnet und ebenfalls mit der Auswerteschaltung 12 elektrisch verbunden.

Die Differenzdruckmeßzelle 11 besteht aus einem zylindrischen Körper 14, an dessen Stirnseiten zwei elastische Membranen 15, 16 unter Einfügung von um den Umfang verlaufenden Distanzringen 17, 18 druckdicht befestigt sind. Der zylindrische Körper 14 und die Membranen 15, 16 bestehen aus einer Metalloxid-Keramik. Desgleichen bestehen die Distanzringe 17,18 vorzugsweise aus einem elektrisch isolierenden Material, beispielsweise aus Glasfritte, das die druckdichte Verbindung zwischen dem zylindrischen Körper 14 und den Membranen 15, 16 bewirkt.

Durch die Distanzringe 17, 18 sind die Membranen 15, 16 im Abstand vom zylindrischen Körper 14 gehalten, so daß zwischen jeder Membran 15, 16 und der ihr zugewandten Stirnseite des zylindrischen Körpers 14 ein flacher Hohlraum 46, 19 entsteht. Diese sind durch einen im zylindrischen Körper 14 gebildeten axialen Kanal 20 miteinander verbunden, so daß sie eine gemeinsame Kammer bilden, die druckdicht nach außen abgeschlossen ist. Das gesamte Volumen der Kammer ist mit einer an sich inkompressiblen, isolierenden Flüssigkeit 21 gefüllt, die Silikonöl sein kann.

Die dem zylindrischen Körper 14 zugewandte Innenseite der Membran 15 ist mit einer Schichtelektrode 22 belegt, die einer ringförmigen Schichtelektrode 23 auf der ihr zugewandten Stirnfläche des zylindrischen Körpers 14 gegenüberliegt. Desgleichen ist die Innenseite der Membran 16 mit einer Schichtelektrode 24 belegt, die einer ringförmigen Schichtelektrode 25 auf der ihr zugewandten Stirnfläche des zylindrischen Körpers 14 gegenüberliegt.

Die Schichtelektroden 22 ... 25 sind mit Verbindungsleitern 26, 27, 28, 29 und über diese mit der Auswerteschaltung 12 verbunden. Angemerkt sei, daß eine besondere Herausführung der Verbindungsleitungen aus der Differenzdruckmeßzelle 11 vorgesehen sein kann.

Die Schichtelektrode 22 bildet mit der ihr gegenüberliegenden Schichtelektrode 23 einen ersten Meßkondensator 30 der Kapazität $C_1$, die zwischen den Verbindungsleitungen 26, 27 meßbar ist. Die Schichtelektrode 24 bildet mit der ihr gegenüberliegenden Schichtelektrode 25 einen zweiten Meßkondensator 31 der Kapazität $C_2$, die zwischen den Verbindungsleitungen 28, 29 meßbar ist.

Der zylindrische Körper 14 ist beispielsweise an seinem Umfang mit dem zusätzlichen Drucksensor 13 versehen, dessen Meßsignal über eine Verbindungsleitung 32 zu der Auswerteschaltung 12 gelangt Der Drucksensor 13 kann dabei aus Dehungsmeßstreifen o. dgl. aufgebaut und auch in zwei Sensoren aufgeteilt sein.

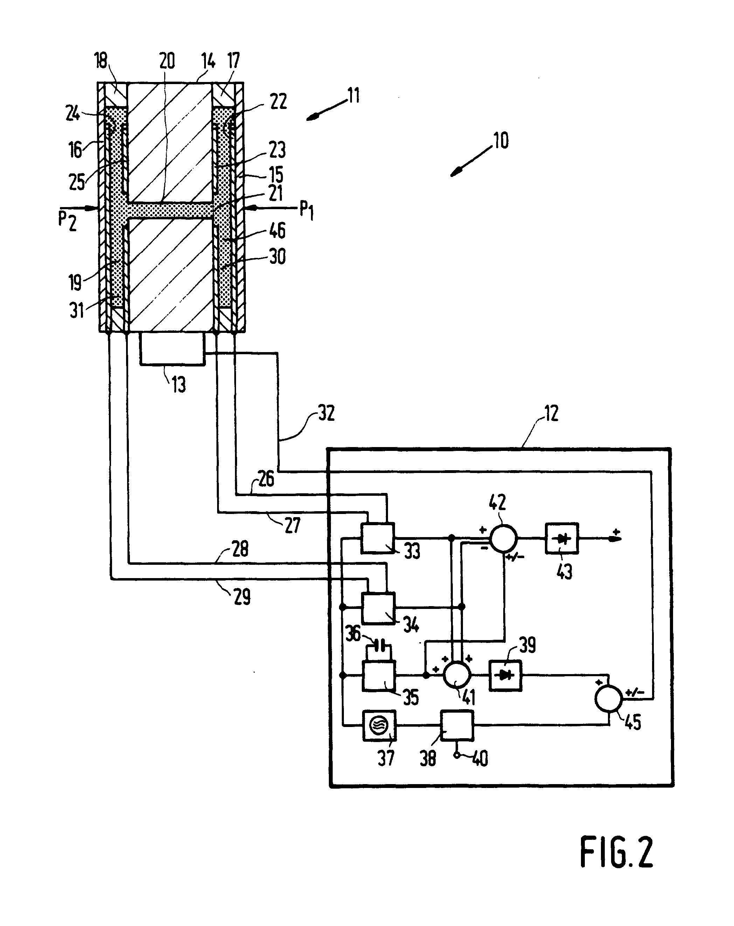

Ferner kann vorgesehen sein, daß der Drucksensor 13 kombinativ gleichzeitig einen zusätzlichen Temperatursensor bildet, dessen Signal zu einem Alarmsignal aufbereitet wird, wie in ähnlicher Weise in der DE-C 39 32 443 beschrieben. Es kann jedoch auch vorgesehen sein, daß zusätzlich ein Temperatursensor, beispielsweise ebenfalls am Umfang des zylindrischen Körpers 14 der Differenzdruckmeßzelle 11, angeordnet ist. Solche Temperatursensoren sind in den Fig. 1 und 2 nicht dargestellt.

Hier sei darauf hingewiesen, daß das vorstehend hinsichtlich der Differenzdruckmeßzelle 11 der Fig. 1 Erläuterte auch für die Differenzdruckmeßzelle 11 der Fig. 2 gilt. Der auf die Differenzdruckmeßzelle 11 wirkende Prozeßdruck $P_s$ ist in den Fig. 1 und 2 mit den Pfeilen $P_1$, $P_2$ bezeichnet.

Die in Fig. 1 dargestellte Auswerteschaltung 12 besteht aus einem ersten Tiefpaß 33 mit dem in einer Gegenkopplung die Verstärkung bestimmenden Meßkondensator 30, der über die Verbindungsleitungen 26, 27 daran angeschlossen ist, und aus einem zweiten Tiefpaß 34 mit dem in der Gegenkopplung die Verstärkung bestimmenden zweiten Meßkondensator 31, der über die Verbindungsleitungen 28, 29 daran angeschlossen ist, sowie aus einem Referenztiefpaß 35 mit einem in der Gegenkopplung die Verstärkung bestimmenden Referenzkondensator 36.

Die Spannungsversorgung der drei Tiefpässe 33, 34, 35 erfolgt über entsprechende Verbindungsleitungen aus einem in seiner Amplitude regelbaren Oszillator 37, wobei die Amplitudenregelung über einen dem Oszillator 37 vorgeschalteten Regler 38 erfolgt, an dessen Eingang die Ausgangsspannung eines ersten Gleichrichters 39 ständig mit einer stabilen Referenzspannungsquelle 40 verglichen wird, wodurch die Oszillatoramplitude derart regelbar ist, daß die von den drei Tiefpässen 33, 34, 35 gelieferten Ausgangsspannungen, mit geeigneten Faktoren bewertet, in einem ersten Summierverstärker 41 addiert werden, wonach dessen Ausgangsspannung mit dem ersten Gleichrichter 39 gleichgerichtet wird.

Die dargestellte Regelung bewirkt, daß die Ausgangsspannungen der drei Tiefpässe 33, 34, 35 eine temperaturabhängige Komponente nach Gleichung (2) zusätzlich zur differenzdruck-abhängigen Komponente nach Gleichung (1) enthalten.

Durch Addition und Subtraktion dieser drei Ausgangsspannungen in einem mit entsprechenden Faktoren versehenen zweiten Summierverstärker 42, dessen Ausgangsspannung mit einem zweiten Gleichrichter 43 gleichgerichtet wird, entsteht an dessen Ausgang eine dem an der Meßzelle anstehenden Differenzdruck proportionale temperatur-kompensierte und normierte Ausgangsspannung.

Um den Einfluß des Prozeßdruckes $P_s$ auf die Differenzdruckmeßzelle 11 und damit auf die Kapazitäten der Meßkondensatoren 30, 31 zu kompensieren, liefert der zusätzliche Drucksensor 13 ein Signal zur Erfassung des Prozeßdruckes durch die dargestellte Anbringung an der Differenzdruckmeßzelle 11 derart, daß der in der Füllflüssigkeit 21 wirkende Prozeßdruck

$$P_s = 0{,}5(P_1 + P_2) \qquad (3)$$

unmittelbar gemessen werden kann, und zwar nach Wandlung in ein dem Prozeßdruck $P_s$ proportionales Spannungssignal, beispielsweise direkt im zusätzlichen Drucksensor 13, welches einem dritten Summierverstärker 44 zugeführt wird, der dem zweiten Gleichrichter 43 nachgeordnet ist.

Im Summierverstärker 44 werden, mit geeigneten Faktoren versehen, die Ausgangsspannung des zweiten Gleichrichters 43 und die Ausgangsspannung des zusätzlichen Drucksensors 13 in gleicher Weise so addiert oder subtrahiert, daß das am Ausgang des Summierverstarkers 44 anstehende Spannungssignal nur noch dem an der Differenzdruckmeßzelle 11 wirkenden Differenzdruck δP proportional und von Einflüssen der Temperatur und des Prozeßdruckes befreit ist.

Fig. 2 zeigt einen insoweit im wesentlichen gleichen Aufbau, weshalb auf die Beschreibung der Fig. 1 verwiesen werden kann. Lediglich hinsichtlich des Summierverstärkers 44 ist auf einen Unterschied hinzuweisen. Das Ausgangssignal des zusätzlichen Drucksensors 13 wird bei dieser Ausgestaltung der Erfindung vorteilhaft auf einen vierten Summierverstärker 45 gegeben, der in der Verbindung zwischen dem ersten Gleichrichter 39 und dem Regler 38 angeordnet ist. Der dritte Summierverstärker 44 entsprechend Fig. 1 entfällt.

Im vierten Summierverstärker 45 wird, mit geeigneten Faktoren versehen, das am Ausgang des ersten Gleichrichters 39 anstehende Spannungssignal zu dem vom zusätzlichen Drucksensor 13 herrührenden, dem Prozeßdruck $P_s$ proportionalen Spannungssignal addiert oder davon subtrahiert und das am Ausgang des Summierverstärkers 45 anstehende Spannungssignal dem Regler 38 zugeführt, so daß die die Differenzdruckmeßzelle 11 beeinflussende Temperatur, welche auf die Amplitude des Oszillators 37 einwirkt, vom Einfluß des Prozeßdruckes befreit wird. Somit ist die Ausgangsspannung des zweiten Gleichrichters 43 wiederum nur dem an der Differenzdruckmeßzelle 11 wirkenden Differenzdruck δP proportional und von Einflüssen der Temperatur und des Prozeßdruckes auf die Differenzdruckmeßzelle 11 befreit.

Beispielsweise kann auch die aus der DE-C 39 32 443 bekannte Rechenschaltung durch einen erfindungsgemäßen zusätzlichen Drucksensor 13 erweitert werden, in dem eine dem anstehenden Prozeßdruck $P_s$ proportionale Spannung in geeigneter Weise analog-digitial-gewandelt wird und zum Zwecke der Korrektur der dem Differenzdruck proportional berechneten Ausgangsgröße in das daraus bekannte Rechenverfahren implementiert wird.

Hier sei darauf hingewiesen, daß die erfindungsgemäße Auswerteschaltung analog und selbstverständlich auch digital ausgestaltet sein kann und das am Ausgang des Gleichrichters 43 gebildete Signal der Gleichung (1) unter Berücksichtigung von Gleichung (2) entspricht, wobei $K_T$ die Temperaturabhängigkeit und $K_s$ die Abhängigkeit vom Prozeßdruck beschreibt.

**Patentansprüche**

1. Differenzdruckmeßgerät (10)

   - mit einer aus Metalloxid-Keramik bestehenden, flüssigkeitsgefüllten Einkammer-Differenzdruckmeßzelle (11)

     - mit einem zylindrischen Körper (14) und
     - mit an dessen stirnseitigen Oberflächen angeordneten Membranen (15, 16), die jeweils Schichtelektroden (23, 25; 22, 24) zur Bildung eines ersten und eines zweiten Meßkondensators (30, 31) tragen, deren Kapazitäten sich mit der zu erfassenden Differenz eines ersten Drukkes ($P_1$) und eines zweiten Druckes ($P_2$), dem Differenzdruck, gegensinnig sowie mit der Temperatur und mit dem anstehenden vom ersten und vom zweiten Druck bewirkten Prozeßdruck $P_s = 0{,}5 (P_1+P_2)$ gleichsinnig ändern,

   - mit einer Auswerteschaltung (12) zur Umwandlung der Meßsignale und Berechnung des Differenzdrucks unter Berücksichtigung einer Temperaturkorrekturgröße,
   - mit einem der unmittelbaren Messung (14) des Prozeßdrucks ($P_s$) dienenden zusätzlichen Sensor (13), der an der Mantelfläche des Körpers (14) angeordnet und mit der Auswerteschaltung (12) verbunden ist, welche eine Korrekturgröße daraus ableitet und zusammen mit der Temperaturkorrekturgröße und den Meßsignalen der Meßkondensatoren (30, 31) ein vollständig fehlerkorregiertes Differenzdrucksignal ausgangsseitig erzeugt

2. Meßgerät nach Anspruch 1, bei dem die Auswerteschaltung (12) einen Regelkreis mit einem Regler (38), einem Oszillator (37), einem Referenztiefpaß (35) mit einem Referenzkondensator (36), einem diesem nachgeordneten ersten Summierverstärker (41) mit Meßsignaleingängen und einem ersten Gleichrichter (39) aufweist, und ferner einen ersten Tiefpaß (33), der mit dem ersten Meßkondensator (30), und einen zweiten Tiefpaß (34), der mit dem zweiten Meßkondensator (31) verbunden ist, und bei dem die Tiefpässe (33, 34, 35) mit dem Ausgang des Oszillators (37) verbunden sind und deren Ausgangssignale über einen nachgeordneten zweiten Summierverstärker (42) und einen zweiten Gleichrichter (43) ein temperaturkompensiertes Differenzdrucksignal erzeugen, auf das mindestens indirekt das Signal des zusätzlichen Sensors (13) einwirkt.

3. Meßgerät nach Anspruch 2, bei dem der erste Summierverstärker (41) eingangsseitig mit den Ausgängen der Tiefpässe (33, 34, 35) verbunden ist und im Regelkreis eine Erhöhung des Signals am Ausgang des ersten Gleichrichters (39) über den Regler (38) eine Absenkung der Amplitude des Oszillators (37) bewirkt, die eingangsseitig auf die Tiefpässe (33, 34, 35) einwirkt, wodurch der zweite Summierverstärker (42) am Ausgang des zweiten Gleichrichters (43) ein temperatur-kompensiertes Differenzdrucksignal erzeugt, auf das indirekt das Signal des zusätzlichen Sensors (13) einwirkt.

4. Meßgerät nach Anspruch 3, bei dem der Referenzkondensator (36) entsprechend dem Mittelwert der Summe der Meßkondensatoren (30, 31) beim Differenzdruck null gewählt ist und die Temperaturkompensation durch Eichung bei mindestens zwei Temperaturen und mindestens zwei Differenzdrükken erfolgt.

5. Meßgerät nach Anspruch 4, bei dem die Auswerteschaltung (12) einen dritten Summierverstärker (44) am Ausgang des zweiten Gleichrichters (43) aufweist, der mit dem Signal des zusätzlichen Sensors (13) als weiterem Eingangssignal beaufschlagt ist, wodurch an dessen Ausgang ein vollständig fehlerkompensiertes Differenzdrucksignal entsteht.

6. Meßgerät nach Anspruch 4, bei dem die Auswerteschaltung (12) einen vierten Summierverstärker (45) aufweist, der eingangsseitig mit dem ersten Gleichrichter (39) und ausgangsseitig mit dem Regler (38) verbunden und ferner eingangsseitig mit dem Signal des zusätzlichen Sensors (13) beaufschlagt ist, wodurch der Prozeßdruck (P$_s$) bereits im Regelkreis berücksichtigt wird und folglich am Ausgang des zweiten Gleichrichters (43) ein vollständig fehlerkompensiertes Differenzdrucksignal entsteht.

7. Meßgerät nach einem der Ansprüche 2 bis 6, bei dem der Regelkreis und somit die Auswerteschaltung (12) über den Regler (38) mit einer Referenzspannungsquelle (40) spannungsversorgt ist.

8. Meßgerät nach Anspruch 7, bei dem der zusätzliche Sensor (13) ein druckproportionales Spannungssignal abgibt und intern aus Dehnungsmeßstreifen o. dgl. aufgebaut ist.

9. Meßgerät nach einem der Ansprüche 1 bis 8, bei dem die Differenzdruckmeßzelle (11) mit einem zusätzlichen Temperaturfühler versehen ist, dessen Ausgangssignal in der Auswerteschaltung (12) in ein Fehlermeldesignal umgesetzt wird, und bei dem die Auswerteschaltung (12) digital aufgebaut ist.

## Claims

1. A differential pressure measuring apparatus (10) comprising:

   - a liquid-filled single-chamber differential pressure measuring cell (11) of metal-oxide ceramic having

     -- a cylindrical body (14) and
     -- diaphragms (15, 16) provided at the end surfaces of the cylindrical body (14) and each supporting film electrodes (23, 25; 22, 24) for forming a first measuring capacitor (30) and a second measuring capacitor (31) whose capacitances vary in opposite directions with the difference between a first pressure (P$_1$) and a second pressure (P$_2$), the differential pressure, as well as in the same direction with the temperature and with the prevailing process pressure P$_s$ = 0,5(P$_1$+P$_2$) caused by the first and second pressures;

   - a processing circuit (12) for converting the measurement signals and calculating the differential pressure taking into account a temperature correction quantity; and
   - an additional sensor (13) at the lateral surface of the body (14) which serves to directly measure the process pressure (P$_s$) and is connected to the processing circuit (12), which derives a correction quantity therefrom and, by combining the correction quantity with the temperature correction quantity and the measurement signals from the measuring capacitors (30, 31), generates a fully error-corrected differential pressure signal at its output.

2. A measuring apparatus as claimed in claim 1 wherein the processing circuit (12) comprises a control loop containing a controller (38), an oscillator (37), a reference low-pass filter (35) with a reference capacitor (36), a subsequent first summing amplifier (41) with measurement signal inputs, and a first rectifier (39), said processing circuit (12) further comprising a first low-pass filter (33), which is connected to the first measuring capacitor (30), and a second low-pass filter (34), which is connected to the second measuring capacitor (31), the low-pass filters (33, 34, 35) being connected to the output of the oscillator (37) and providing output signals which are passed through a subsequent second summing amplifier (42) and a second rectifier (43) to generate a temperature-compensated differential pressure signal on which the signal from the additional sensor (13) acts at least indirectly.

3. A measuring apparatus as claimed in claim 2 wherein the first summing amplifier (41) is connected at the input end to the outputs of the low-pass filters (33, 34, 35), and wherein in the control loop, an increase in the magnitude of the signal at the output of the first rectifier (39) causes, via the controller (38), a decrease in the amplitude of the oscillator (37), which acts on the low-pass filters (33, 34, 35) at the input ends thereof, so that the second summing amplifier (42) generates at the output of the second rectifier (43) a temperature-compensated differential pressure signal on which the signal from the additional sensor (13) acts indirectly.

4. A measuring apparatus as claimed in claim 3 wherein the reference capacitor (36) is chosen in accordance with the mean value of the sum of the measuring capacitors (30, 31) at zero differential pressure, and wherein the temperature compensation is effected by calibration at at least two temperatures and at least two differential pressures.

5. A measuring apparatus as claimed in claim 4 wherein the processing circuit (12) comprises a third summing amplifier (44) at the output of the second rectifier (43) which receives the signal from the additional sensor (13) as a further input signal, so that a fully error-compensated differential pressure signal appears at its output.

6. A measuring apparatus as claimed in claim 4 wherein the processing circuit (12) comprises a fourth summing amplifier (45) which is connected at the input end to the first rectifier (39) and at the output end to the controller (38) and receives the signal from the additional sensor (13) as a further input signal, so that the process pressure ($P_s$) is taken into account already in the control loop and, consequently, a fully error-compensated differential pressure signal appears at the output of the second rectifier (43).

7. A measuring apparatus as claimed in any one of claims 2 to 6 wherein the control loop, and thus the processing circuit (12), is furnished with a voltage from a reference voltage source (40) via the controller (38).

8. A measuring apparatus as claimed in claim 7 wherein the additional sensor (13) provides a voltage signal proportional to the pressure and is constructed internally from strain gages or the like.

9. A measuring apparatus as claimed in any one of claims 1 to 8 wherein the differential pressure measuring cell (11) is provided with an additional temperature sensor whose output signal is converted to an error indication signal in the processing circuit (12), and wherein the processing circuit (12) is a digital circuit.

## Revendications

1. Appareil de mesure de pression différentielle (10), comprenant :

   - une cellule de mesure de pression différentielle (11) monochambre, en céramique d'oxyde métallique, et remplie de liquide, cellule qui comprend :

     -- un corps cylindrique (14) et

     -- des membranes (15, 16) agencées sur ses surfaces frontales et qui portent respectivement des électrodes en couche (23, 25 ; 22, 24) servant à former un premier et un deuxième condensateurs de mesure (30, 31) dont les capacités varient, d'une part, dans un sens inverse l'une par rapport à l'autre avec la différence entre une première pression ($P_1$) et une deuxième pression ($P_2$), c'est-à-dire la pression différentielle et, d'autre part, dans le même sens avec la température et avec la pression opérationelle $P_s = 0{,}5(P_1+P_2)$ présente et déterminée par la première pression et par la deuxième pression,

   - un circuit d'évaluation (12) servant à transformer les signaux de mesure et à calculer la pression différentielle en tenant compte d'une grandeur de correction de la température,

   - un capteur additionnel (13) servant à la mesure directe (14) de la pression opérationnelle ($P_s$), qui est monté sur la surface de l'enveloppe du corps (14) et est relié au circuit d'évaluation (12), lequel en tire une grandeur de correction et produit en sortie, avec la grandeur de correction de température et les signaux de mesure des condensateurs de mesure (30, 31), un signal de pression différentielle entièrement corrigé des erreurs.

**2.** Appareil de mesure selon la revendication 1, dans lequel le circuit d'évaluation (12) présente un circuit de régulation comprenant un régulateur (38), un oscillateur (37), un passe-bas de référence (35) comprenant lui-même un condensateur de référence (36), un premier amplificateur additif (41) placé en aval de ce passe-bas, et possédant des entrées de signaux de mesure et un premier redresseur (39) et présente, en outre, un premier passe-bas (33) qui est connecté au premier condensateur de mesure (30), et un deuxième passe-bas (34) qui est connecté au deuxième condensateur de mesure (31), et dans lequel les passe-bas (33, 34, 35) sont connectés à la sortie de l'oscillateur (37) et dont les signaux de sortie produisent, à travers un deuxième amplificateur additif (42) placé en aval et un deuxième redresseur (43), un signal de pression différentielle compensé de la température, sur lequel le signal du capteur additionnel (13) agit au moins indirectement.

**3.** Appareil de mesure selon la revendication 2, dans lequel le premier amplificateur additif (41) est connecté, côté entrée, aux sorties des passe-bas (33, 34, 35) et, dans le circuit de régulation, une élévation du signal apparaissant à la sortie du premier redresseur (39) détermine, par l'intermédiaire du régulateur (38), une diminution de l'amplitude de l'oscillateur (37) qui agit, côté entrée, sur les passe-bas (33, 34, 35), de sorte que le deuxième amplificateur additif (42) produit à la sortie du deuxième redresseur (3) un signal de pression différentielle compensé de la température, sur lequel le signal du capteur additionnel (13) agit indirectement.

**4.** Appareil de mesure selon la revendication 3, dans lequel le condensateur de référence (36) est choisi pour correspondre à la valeur moyenne de la somme des condensateurs de mesure (30, 31) en présence d'une pression différentielle nulle, et la compensation de température s'effectue par étalonnage à au moins deux températures et au moins deux pressions différentielles.

**5.** Appareil de mesure selon la revendication 4, dans lequel le circuit d'évaluation (12) présente, à la sortie du deuxième redresseur (43), un troisième amplificateur additif (44) qui reçoit comme autre signal d'entrée le signal du capteur additionnel (13), de sorte qu'à sa sortie, on obtient un signal de pression différentielle entièrement compensé d'erreurs.

**6.** Appareil de mesure selon la revendication 4, dans lequel le circuit d'évaluation (12) présente un quatrième amplificateur additif (45) qui est connecté, côté entrée, au premier redresseur (39) et, côté sortie, au régulateur (38) et qui reçoit en outre, côté entrée, le signal du capteur additionnel (13), de sorte que la pression opérationnelle ($P_s$) est déjà prise en compte dans le circuit de régulation et qu'on obtient par conséquent à la sortie du deuxième redresseur (43) un signal de pression différentielle entièrement compensé des erreurs.

**7.** Appareil de mesure selon une des revendications 2 à 6, dans lequel le circuit de régulation et, par conséquent, le circuit d'évaluation (12), sont alimentés en tension par l'intermédiaire du régulateur (38) équipé d'une source de tension de référence (40).

**8.** Appareil de mesure selon la revendication 7, dans lequel le capteur additionnel (13) émet un signal de tension proportionnel à une pression et est composé intérieurement d'extensiomètres ou analogues.

**9.** Appareil de mesure selon une des revendications 1 à 8, dans lequel la cellule de mesure de pression différentielle (11) est munie d'un capteur de température additionnel dont le signal de sortie est converti dans le circuit d'évaluation (12) en un signal d'alarme d'erreur, et dans lequel le circuit d'évaluation (12) est de nature numérique.

FIG.1

FIG.2